# EUROPÄISCHE PATENTSCHRIFT

(11) **EP 0 535 358 B1**
(45) Veröffentlichungstag und Bekanntmachung des Hinweises auf die Patenterteilung: **09.10.1996**
(21) Anmeldenummer: 92114287.3
(22) Anmeldetag: 21.08.1992
(51) Int. Cl.: C08G 18/65, C08G 18/42, C08J 9/14

(54) **Verfahren zur Herstellung von flammgeschützten Urethangruppen aufweisenden Hartschaumstoffen**
Process for the preparation of flame-proofed rigid foams containing urethane groups
Procédé de préparation de mousses rigides ignifuges contenant des groupes d'uréthane

(30) Priorität: 03.09.1991 DE 4129285
(43) Veröffentlichungstag der Anmeldung: 07.04.1993
(73) Patentinhaber: BAYER AG, 51368 Leverkusen (DE)
(72) Erfinder: Wiedermann, Rolf, Dr., W-5068 Odenthal-Voiswinkel (DE); Wendel, Stephen, Dr., W-5090 Leverkusen 1 (DE); Heilig, Gerhard, Dr., W-5060 Bergisch Gladbach 2 (DE); Schmitz, Wolfgang, W-5068 Odenthal-Blecher (DE)

(56) Entgegenhaltungen:
- EP-A- 0 151 401
- EP-A- 0 199 938
- EP-A- 0 364 854
- EP-A- 0 472 080
- US-A- 4 544 679

## Beschreibung

Die vorliegende Erfindung betrifft ein Verfahren zur Herstellung flammgeschützter, FCKW-freier Urethangruppen aufweisender Hartschaumstoffe.

Der Ersatz von FCKW als Treibmittel in Polyurethan-Hartschaumstoffen durch andere Treibmittel, z.B. CO₂, ist problematisch, da
- die Rohdichte angehoben werden muß, um dimensionsstabile Produkte zu erhalten und
- das Brandverhalten der Schaumstoffe in der Regel verschlechtert wird.

Die Verwendung von Kohlenwasserstoffen, z.B. Pentan, als Treibmittel, ermöglicht zwar die Herstellung von Schaumstoffen mit "normalen" Rohdichten von 30 kg/m³, hat aber einen sehr ungünstigen Einfluß auf das Brandverhalten.

Um solche Schaumstoffe mit einem notwendigen Flammschutz auszurüsten, wurden verschiedentlich feste Flammschutzmittel vorgeschlagen, z.B. gemäß GB-A 2 177 405, GB-AS 2 177 406 oder EP-A 239 891. Diese haben jedoch wesentliche Nachteile. Sie sind in kontinuierlichen Produktionsprozessen mit Hochdrucktechnik schwer dosierbar. Zudem führen sie zur Versprödung der Hartschaumstoffe.

Aus der EP-A-199 938 sind Polyolkompositionen zur Herstellung von harten Polyurethan-Schaumstoffen bekannt, bei denen neben 20 bis 50 Gew.-% eines Flammschutzmittels neben Wasser immer ein halogensubstituiertes Alkan eingesetzt wird.

Die US-A-4 544 679 offenbart Polyolmischungen zur Herstellung von Polyisocyanurat-Schaumstoffen, wobei als mögliche Treibmittel auch unsubstituierte organische flüchtige Verbindungen wie Butan, Hexan, Heptan sowie Diethylether vorgeschlagen werden.

In der EP-A-364 854 wird die Herstellung von Integralschäumen, insbesondere weichen flexiblen Schuhsohlen, unter Einsatz von aliphatischen und/oder cycloaliphatischen Kohlenwasserstoffen als Treibmittel beschrieben.

Es wurde bereits versucht, Pentan-getriebene PUR-Hartschaumstoffe unter Verwendung von flüssigen Flammschutzmitteln und Polyestern herzustellen. Um den Anforderungen der Brandklasse B2 nach DIN 4102 zu entsprechen, ist jedoch ein Flammschutzanteil von mindestens 50 Gew.-% in der Polyolformulierung notwendig.

Es wurden nun überraschend Schaumstofformulierungen gefunden, die es gestatten, mit aromatenreichen Polyolkomponenten unter Verwendung von z.B. Pentan und Wasser als Treibmittel flammgeschützte Urethangruppen aufweisende Hartschaumstoffe herzustellen, die deutlich weniger als 50 Gew.-% Flammschutzmittel enthalten und trotzdem die Anforderungen der Brandklasse B2 erfüllen.

Gegenstand der Erfindung ist ein Verfahren zur Herstellung von flammgeschützten harten Urethangruppen aufweisenden Schaumstoffen mit einer Dichte zwischen 30 bis 50 kg/m³ durch Umsetzung von
1) Polyisocyanaten mit
2) mindestens zwei gegenüber Isocyanaten aktive Wasserstoffatome aufweisenden Verbindungen vom Molekulargewicht 400 bis 10 000 in Gegenwart von
3) Wasser und C₁-C₆-Kohlenwasserstoffen als organische Treibmittel und von
4) Flammschutzmitteln sowie von
5) Verbindungen mit mindestens zwei gegenüber Isocyanaten reaktionsfähigen Wasserstoffatomen und einem Molekulargewicht von 32 bis 399 als Vernetzer und gegebenenfalls in Gegenwart von
6) an sich bekannten Hilfs- und Zusatzstoffen,
dadurch gekennzeichnet, daß die Komponente 2) einen Aromatenanteil von 5 bis 80 Gew.-X aufweist und daß man sie, das Flammschutzmittel 4) und die Vernetzerkomponente 5) als Formulierung einsetzt, in der
die Komponente 2) zu 45 bis 75 Gew.-Teilen,
die Komponente 4) in einer Menae von 20 bis 50 Gew.-Teilen und
die Komponente 5) in einer Menge von 5 bis 15 Gew.-Teilen
enthalten ist, wobei sich die Gew.-Teile dieser Komponenten zu 100 ergänzen.

Erfindungsgemäß werden C₁-C₆-Kohlenwasserstoffe, insbesondere Pentan und/oder Cyclopentan und/oder Hexan und/oder Cyclohexan, als organisches Treibmittel verwendet.

Für die Herstellung der Urethangruppen aufweisenden Schaumstoffe werden als Ausgangskomponenten eingesetzt:
1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   - n: 2 bis 4, vorzugsweise 2, und
   - Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einen aromatischen Kohlenwasserstoffrest mit 6 bis 15, vorzugsweise 6 bis 13, C-Atomen oder einen araliphatischen Kohlenwasserstoffrest mit 8 bis 15, vorzugsweise 8 bis 13, C-Atomen bedeuten, z.B. solche Polyisocyanate, wie sie in der DE-OS 28 32 253, Seiten 10 bis 11, beschrieben werden.

   Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- undloder 2,6-Toluylendiisocyanat bzw. vom 4,4'- undloder 2,4'-Diphenylmethandiisocyanat ableiten.
2. Ausgangskomponenten sind ferner Verbindungen mit mindestens zwei gegenüber Isocyanaten reaktionsfähigen Wasserstoffatomen und einem Molekulargewicht in der Regel von 400 bis 10.000, die einen Aromatenanteil von 5 bis 80 Gew.-%, vorzugsweise 20-60 Gew.-%, (berechnet auf C-Gehalt), aufweisen ("Polyolkomponente"). ). Hierunter versteht man neben Aminogruppen, Thiolgruppen oder Carboxylgruppen aufweisenden Verbindungen vorzugsweise Hydroxylgruppen aufweisende Verbindungen, vorzugsweise Polyether, Polyester, Polycarbonate, Polylactone und Polyamide, insbesondere 2 bis 8 Hydroxylgruppen aufweisende Verbindungen, speziell solche vom Molekulargewicht 1.000 bis 8.000, vorzugsweise 2.000 bis 4.000, z.B. derartige, mindestens 2, in der Regel 2 bis 8, vorzugsweise 2 bis 4, Hydroxylgruppen aufweisende Verbindungen, wie sie für die Herstellung von homogenen und von zellförmigen Polyurethanen an sich bekannt sind und wie sie z.B. in der DE-OS 28 32 253, Seiten 11 bis 18, beschrieben werden. Auch Gemische verschiedener derartiger Verbindungen kommen erfindungsgemäß in Frage.
3. Als Treibmittel werden Wasser und C₁-C₆-Kohlenwasserstoffe, vorzugsweise Pentan und/oder Cyclopentan und/oder Hexan und/oder Cyclohexan, verwendet. Als Pentan kommt n-Pentan und seine Isomeren in Frage, besonders bevorzugt ist Isopentan. Die Menge des Treibmittels wird so gewählt, daß die Rohdichte der erhaltenen Hartschaumstoffe in der Regel zwischen 30-50 kg/m³, vorzugsweise zwischen 35-45 kg/m³, liegt.
4. Als Flammschutzmittel werden an sich bekannte Flammschutzmittel, vorzugsweise bei 20°C flüssige Produkte, verwendet.
5. Ausgangskomponenten sind ferner Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19 bis 20, beschrieben.
6. Gegebenenfalls mitverwendet werden an sich bekannte Hilfs- und Zusatzstoffe, wie Emulgatoren und Schaumstabilisatoren. Als Emulgatoren sind solche auf Basis alkoxilierter Fettsäuren und höherer Alkohole bevorzugt.
   Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 28 34 748, 29 17 480 und 36 29 308 beschrieben. Auch die aus der Polyurethanchemie an sich bekannten Katalysatoren wie tert.-Amine und/oder metallorganische Verbindungen können mitverwendet werden.
   Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

### Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hansen-Verlag, München 1966, z.B. auf den Seiten 121 bis 205 beschrieben. Im allgemeinen wird die Umsetzung bei Kennzahlen von 90-300, vorzugsweise 100-250 durchgeführt. Bei Anwendung höherer Kennzahlen entstehen auch Isocyanuratstrukturen im Schaumstoff.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 31 78 490 und 31 82 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 21 21 670 und 23 07 589 bekanntgeworden sind.

Selbstverständlich können aber auch Schaumstoffe durch Blockverschäumung oder nach dem an sich bekannten Doppeltransportbandverfahren hergestellt werden.

Die nach der Erfindung erhältlichen Hartschaumstoffe finden dort Anwendung, wo erhöhte Flammwidrigkeit für Schaumstoffe erforderlich ist, wie z.B. im Bauwesen, für die Isolierung des Motorbereichs von Last- und Personenkraftwagen, als Beschichtungsstoffe mit erhöhter Flammwidrigkeit und zur flächigen Isolierung von Motorhauben zur Schallschutzwirkung.

### Ausführungsbeispiele

### Ausgangsprodukte

### Polyol A (Vergleich):

Es wurde eine Mischung (Formulierung) folgender Komponenten hergestellt:
100 Gew.-Teile eines Polyolgemisches der OH-Zahl 594 bestehend aus:
29 Gew.-Teilen eines Polyesters der Hydroxylzahl 380, hergestellt aus Adipinsäure, Phthalsäureanhydrid, Ölsäure und Trimethylolpropan
20 Gew.-Teilen eines Polyesters der Hydroxylzahl 210, hergestellt durch Umsetzung von Adipinsäure- und Phthalsäureanhydrid mit Glycerin und Propylenglykol
24 Gew.-Teilen eines Polyethers der Hydroxylzahl 620, hergestellt durch Propoxylierung von Ethylendiamin
16 Gew.-Teilen Glycerin
11 Gew.-Teilen, hergestellt durch Umsetzung von Phthalsäureanhydrid mit Benzylalkohol und Butanol

### Polyol B (erfindungsgemäß):

Es wurde eine Mischung (Formulierung) folgender Komponenten hergestellt:
100 Gew.-Teile eines Polyolgemisches der OH-Zahl 486 bestehend aus:
29 Gew.-Teilen des handelsüblichen Flammschutzmittels Ixol® B 251 der Fa. Kali-Chemie, Hannover
38 Gew.-Teilen eines Polyesters der Hydroxylzahl 440, hergestellt durch Propoxylierung eines Umsetzungsproduktes von Phthalsäure, Sorbit und Diethylenglykol
5 Gew.-Teilen Gycerin
28 Gew.-Teilen Thanol® R 470 x, der Firma Petrochemicals mit einer Hydroxylzahl von 470.

### Polyol C (erfindungsgemäß):

Es wurde eine Mischung (Formulierung) folgender Komponenten hergestellt:
100 Gew.-Teile eines Polyolgemisches der OH-Zahl 448 bestehend aus:
29 Gew.-Teilen des handelsüblichen Flammschutzmittels Ixol® B 251 der Firma Kali-Chemie, Hannover
38 Gew.-Teilen eines Polyesters der Hydroxylzahl 440, hergestellt durch Propoxylierung eines Umsetzungsproduktes von Phthalsäure, Sorbit und Diethylenglykol
5 Gew.-Teilen Glycerin
14 Gew.-Teilen Thanol® R 470 x der Firma Petrochemicals mit einer Hydroxylzahl von 470
14 Gew.-Teilen eines Polyethers mit der Hydroxylzahl 200, hergestellt durch Propoxylierung eines Umsetzungsproduktes von Phenol mit Aceton.

### Polyol D (erfindungsgemäß):

Es wurde eine Mischung (Formulierung) folgender Komponenten hergestellt:
100 Gew.-Teile eines Polyolgemisches der OH-Zahl 393 bestehend aus:
26 Gew.-Teilen des handelsüblichen Flammschutzmittels Ixol® B 251 der Firma Kali-Chemie, Hannover
30 Gew.-Teilen eines Polyesters der Hydroxylzahl 440, hergestellt durch Propoxylierung eines Umsetzungsproduktes von Phthalsaure, Sorbit und Diethylenglykol
4 Gew.-Teilen Glycerin
40 Gew.-Teilen eines Polyethers mit der Hydroxylzahl 200, hergestellt durch Propoxylierung eines Umsetzungsproduktes von Phenol mit Aceton.

### Polyol E (Vergleich)

Es wurde eine Mischung (Formulierung) folgender Komponenten hergestellt:
100 Gew.-Teile einer Polyolmischung der OH-Zahl 397, bestehend aus:
9 Gew.-Teilen eines Polyethers der Hydroxylzahl 185, hergestellt durch Umsetzung von Propylenglykol mit Ethylenoxid
7 Gew.-Teilen eines Polyethers der Hydroxylzahl 640, hergestellt durch Umsetzung von Ethylendiamin mit Ethylenoxid und Propylenoxid
6 Gew.-Teilen eines Polyesters der Hydroxylzahl 685, hergestellt durch Umsetzung von Phthalsäureanhydrid mit Diethylenglykol
30 Gew.-Teilen eines Polyethers der Hydroxylzahl 375, hergestellt durch Umsetzung von Saccharose, Propylenglykol mit Propylenoxid
43 Gew.-Teilen eines Polyesters der Hydroxylzahl 210, hergestellt durch Umsetzung von Adipinsäure, Phthalsäureanhydrid mit Glycerin und Propylenglykol
5 Gew.-Teilen Glycerin

### Polyol F (erfindungsgemaß)

Es wurde eine Mischung (Formulierung) folgender Komponenten hergestellt:
100 Gew.-Teile einer Polyolmischung der OH-Zahl 363, bestehend aus:
5 Gew.-Teilen Glycerin
6 Gew.-Teilen eines Polyethers der Hydroxylzahl 640, hergestellt durch Umsetzung von Propylenglykol mit Ethylenoxid
5 Gew.-Teilen eines Polyethers der Hydroxylzahl 640, hergestellt durch Umsetzung von Ethylendiamin mit Ethylenoxid und Propylenoxid
4 Gew.-Teilen eines Polyesters der Hydroxylzahl 685, hergestellt durch Umsetzung von Phthalsäureanhydrid mit Diethylenglykol
19 Gew.-Teilen eines Polyethers der Hydroxylzahl 440, hergestellt durch Propoxylierung eines Umsetzungsproduktes von Phthalsaureanhydrid, Sorbit und Diethylenglykol
30 Gew.-Teilen eines Polyesters der Hydroxylzahl 300, hergestellt durch Umsetzung von Ethylenoxid mit Phthalsaureanhydrid und Diethylenglykol
31 Gew.-Teilen des handelsüblichen Flammschutzmittels Disflamoll® DPK der Firma Ciba Geigy Plastics /

In den nachfolgend genannten Beispielen und Vergleichsbeispielen wurden das Polyol mit dem Polyisocyanat und den in den Rezepturen genannten Zusatzmitteln intensiv vermischt und zur Umsetzung gebracht.

**Tabelle 1**

| (Vergleich) | | | |
|---|---|---|---|
| Rezeptur in Gew.-Teilen Vergleichsbeispiele | 1 | 2 | 3 |
| Polyol A | 50 | 51 | 51 |
| Flammschutzmittel Ixol® B 251 (Solvay) | 28 | 28 | 28 |
| Flammschutzmittel Tris-(β- 22 chlorisopropyl)-phosphat | 22 | - | - |
| Dimethylcyclohexylamin | 1,1 | 0,8 | 0,8 |
| Polyether-polysiloxan-Schaum-Stabilisator VPAC 3279 (Bayer AG) | 1,5 | 1,2 | 1,2 |
| Wasser | 1,7 | 1,3 | 0,6 |
| Pentan | 10 | 8 | 8 |
| Polyisocyanat (Roh-MDI, Desmodur® 44V70) (Bayer AG) | 135 | 108 | 108 |
| Sprödigkeit | keine | wenig | wenig |
| Haftung der Papierdeckschicht nach 24 Stunden | gut | gut | gut |
| Rohdichte (kg/m³) | 32 | 32 | 39 |
| ø Flammhöhe im Kleinbrenner- | 140 | über | über |
| test DIN 4102 (mm) | | 200 | 200 |
| Klassifizierung nach DIN 4102 | B2 | B3 | B3 |

Die Ergebnisse in der Tabelle 1 zeigen, daß eine Reduktion des Anteils an Flammschutzmittel sich ungünstig auf das Brandverhalten auswirkt.

**Tabelle 2**

| (erfindungsgemäß) | | | | |
|---|---|---|---|---|
| Rezeptur in Gew.-Teilen Beispiele | 1 | 2 | 3 | 4 |
| Polyol B | 100 | - | 100 | - |
| Polyol C | - | 100 | - | - |
| Polyol D | - | - | - | 100 |
| Dimethylcyclohexylamin | 1,1 | 1,5 | 1,5 | 1,5 |
| Polyether-Polysiloxan-Schaum-Stabilisator VPAC 3279 (Bayer AG) | 1,0 | 1,0 | 1,0 | 1,0 |
| Wasser | 1,5 | 1,5 | 1,5 | 1,5 |
| Pentan | 6 | 6 | 6 | 6 |
| Polyisocyanat (Roh-MDI, Desmodur 44V20) (Bayer AG) | 130 | 130 | - | 130 |
| Polyisocyanat (Roh-MDI, Desmodur 44V70) (Bayer AG) | - | - | 135 | - |
| Sprödigkeit | wenig | wenig | wenig | wenig |
| Haftung der Papierdeckschicht nach 24 Stunden | gut | gut | gut | gut |
| Rohdichte (kg/m³ ) | 39 | 40 | 39 | 39 |
| ø Flammhöhe im Kleinbrenner-test DIN 4102 (mm) | 135 | 140 | 135 | 140 |
| Klassifizierung nach DIN 4102 | B2 | B2 | B2 | B2 |

Die Ergebnisse in der Tabelle 2 zeigen, daß alle erfindungsgemäßen Polyole bei der Verschäumung mit Pentan und Wasser die Brandklasse B2 nach DIN 4102 erreichen. Sprödigkeit und Haftung der Deckschichten können als gut bezeichnet werden.

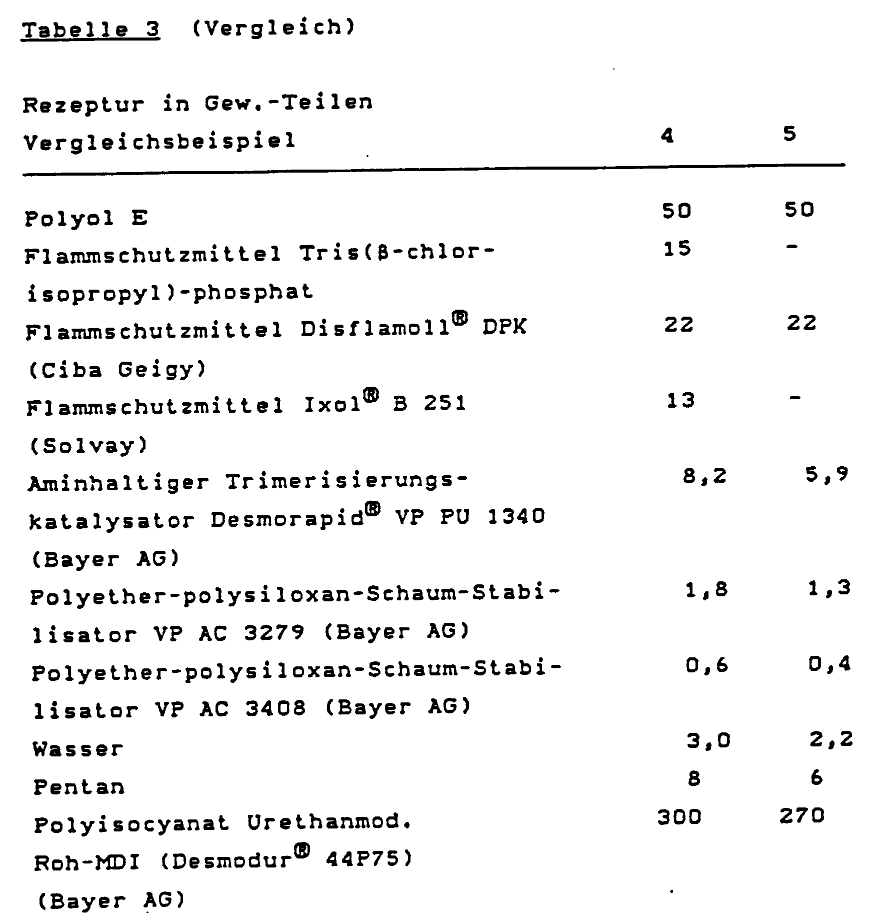

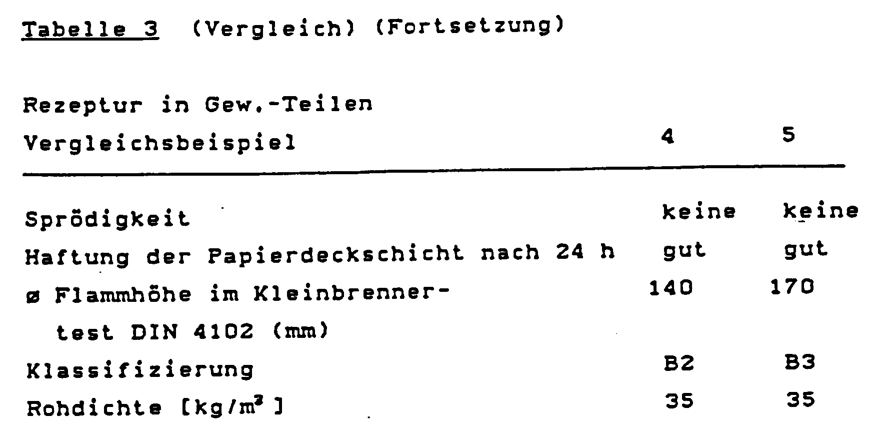

**Tabelle 4**

| (erfindungsgemäß) | |
|---|---|
| Rezeptur in Gew.-Teilen Beispiel | 5 |
| Polyol F | 100 |
| Aminhaltiger Trimerisierungskatalysator Desmorapid® VP PU 1340 (Bayer AG) | 7,8 |
| Polyether-polysiloxan-Schaum-Stabilisator VP AC 3279 (Bayer AG) | 1,8 |
| Polyether-polysiloxan-Schaum-Stabilisator VP AC 3408 (Bayer AG) | 0,6 |
| Wasser | 3 |
| Pentan | 8 |
| Polyisocyanat Urethanmod. Roh-MDI (Desmodur® 44P75) (Bayer AG) | 300 |
| Sprödigkeit | keine |
| Haftung der Papierdeckschicht nach 24 h | gut |
| Flammenhöhe im Kleinbrennertest | 135 |
| DIN 4102 [mm] Klassifizierung | B2 |
| Rohdichte [kg/m³] | 35 |

## Patentansprüche

1. Verfahren zur Herstellung von flammgeschützten harten Urethangruppen aufweisenden Schaumstoffen mit einer Dichte zwischen 30 bis 50 kg/m³ durch Umsetzung von
1) Polyisocyanaten mit
2) mindestens zwei gegenüber Isocyanaten aktive Wasserstoffatome aufweisenden Verbindungen vom Molekulargewicht 400 bis 10 000 in Gegenwart von
3) Wasser und C₁-C₆-Kohlenwasserstoffe als organische Treibmitteln und von
4) Flammschutzmitteln sowie von
5) Verbindungen mit mindestens zwei gegenüber Isocyanaten reaktionsfähigen Wasserstoffatomen und einem Molekulargewicht von 32 bis 399 als Vernetzer und gegebenenfalls in Gegenwart von
6) an sich bekannten Hilfs- und Zusatzstoffen,
dadurch gekennzeichnet, daß die Komponente 2) einen Aromatenanteil von 5 bis 80 Gew.-% aufweist und daß man sie, das Flammschutzmittel 4) und die Vernetzerkomponente 5) als Formulierung einsetzt, in der
die Komponente 2) zu 45 bis 75 Gew.-Teilen,
die Komponente 4) in einer Menge von 20 bis 50 Gew.-Teilen und
die Komponente 5) in einer Menge von 5 bis 15 Gew.-Teilen
enthalten ist, wobei sich die Gew.-Teile dieser Komponenten zu 100 ergänzen.

2. Verfahren gemäß Anspruch 1, dadurch gekennzeichnet, daß als organisches Treibmittel Pentan verwendet wird.

3. Verfahren gemäß Anspruch 1, dadurch gekennzeichnet, daß als organisches Treibmittel Hexan verwendet wird.

4. Verfahren gemäß Anspruch 1, dadurch gekennzeichnet, daß als organische Treibmittel Cyclopentan verwendet wird.

5. Verfahren gemäß Anspruch 1, dadurch gekennzeichnet, daß als organisches Treibmittel Cyclohexan verwendet wird.

6. Verfahren gemäß Anspruch 1, dadurch gekennzeichnet, daß als organisches Treibmittel Gemische von Pentan, Cyclopentan, Hexan und Cyclohexan verwendet werden.

## Claims

1. Method for the preparation of flameproofed rigid foams containing urethane groups, having a density of between 30 and 50 kg/m³, by the reaction of
1) polyisocyanates with
2) compounds having at least two hydrogen atoms active towards isocyanates, of a molecular weight of 400 to 10,000, in the presence of
3) water and C₁-C₆ hydrocarbons as organic blowing agents and of
4) flameproofing agents and of
5) compounds having at least two hydrogen atoms reactive to isocyanates and a molecular weight of 32 to 399 as cross-linking agents and optionally in the presence of
6) known per se auxiliary substances and additives,
characterised in that component 2) contains a proportion of aromatics of from 5 to 80 wt.% and that component 2), the flameproofing agent 4) and the cross-linking component 5) are used as a formulation, wherein are contained
component 2) in a quantity of from 45 to 75 parts by weight,
component 4) in a quantity of from 20 to 50 parts by weight,
component 5) in a quantity of from 5 to 15 parts by weight,
with the parts by weight of these components adding up to 100.

2. Method according to claim 1, characterised in that pentane is used as organic blowing agent.

3. Method according to claim 1, characterised in that hexane is used as organic blowing agent.

4. Method according to claim 1, characterised in that cyclopentane is used as organic blowing agent.

5. Method according to claim 1, characterised in that cyclohexane is used as organic blowing agent.

6. Method according to claim 1, characterised in that mixtures of pentane, cyclopentane, hexane and cyclohexane are used as an organic blowing agent.

## Revendications

1. Procédé pour la préparation de mousses dures ignifuges présentant des groupes uréthane, possédant une masse volumique entre 30 et 50 kg/m³, par mise en réaction
1) de polyisocyanates avec
2) des composés contenant au moins deux atomes d'hydrogène actifs vis-à-vis d'isocyanates et possédant un poids moléculaire de 400 à 10.000, en présence
3) d'eau et d'hydrocarbures en C₁-C₆, comme agents moussants et
4) d'agents ignifuges, ainsi que
5) de composés contenant au moins deux atomes d'hydrogène aptes à réagir vis-à-vis d'isocyanates et possédant un poids moléculaire de 32 à 399, comme agents de réticulation, et éventuellement en présence
6) d'adjuvants et d'additifs connus en soi,
caractérisé en ce que le composant 2) présente une fraction aromatique de 5 à 80% en poids et en ce qu'on met en oeuvre le premier cité, l'agent ignifuge 4) et l'agent de réticulation 5) sous forme d'une formulation dans laquelle
le composant 2) est contenu à concurrence de 45 à 75 parties en poids,
le composant 4) est contenu en une quantité de 20 à 50 parties en poids, et
le composant 5) est contenu en une quantité de 5 à 15 parties en poids,
les parties en poids de ces composants se complétant pour donner 100.

2. Procédé selon la revendication 1, caractérisé en ce que, comme agent moussant organique, on utilise du pentane.

3. Procédé selon la revendication 1, caractérisé en ce que, comme agent moussant organique, on utilise de l'hexane.

4. Procédé selon la revendication 1, caractérisé en ce que, comme agent moussant organique, on utilise du cyclopentane.

5. Procédé selon la revendication 1, caractérisé en ce que, comme agent moussant organique, on utilise du cyclohexane.

6. Procédé selon la revendication 1, caractérisé en ce que, comme agent moussant organique, on utilise des mélanges de pentane, de cyclopentane, d'hexane et de cyclohexane.
